(19) **Europäisches Patentamt**

**European Patent Office**

**Office européen des brevets**

(11) Numéro de publication : **0 101 361**
**B1**

(12) **FASCICULE DE BREVET EUROPÉEN**

(45) Date de publication du fascicule du brevet :
**11.12.85**

(21) Numéro de dépôt : **83401565.3**

(22) Date de dépôt : **28.07.83**

(51) Int. Cl.⁴ : **B 64 G 1/44**, B 64 G 1/66

(54) **Dispositif de dérivation d'effort temporaire pour maintien en position de stockage d'un appendice déployable pour véhicule spatial.**

(30) Priorité : **30.07.82 FR 8213361**

(43) Date de publication de la demande :
**22.02.84 Bulletin 84/08**

(45) Mention de la délivrance du brevet :
**11.12.85 Bulletin 85/50**

(84) Etats contractants désignés :
**DE GB IT NL SE**

(56) Documents cités :
**FR-A- 2 452 693**
**FR-A- 2 470 727**

(73) Titulaire : **SOCIETE NATIONALE INDUSTRIELLE AEROSPATIALE**
**37 boulevard de Montmorency**
**F-75016 Paris Cedex 16 (FR)**

(72) Inventeur : **Rinn, Christian**
**Résidence Altamira Allée des Vergnes**
**F-06210 Mandelieu (FR)**
Inventeur : **Marello, Georges**
**520, rue Janvier Passero**
**F-06210 Mandelieu (FR)**
Inventeur : **Vezain, Gérard**
**Domaine de Maure Vieil Villa 137**
**D-06210 Mandelieu (FR)**

(74) Mandataire : **Rinuy, Guy et al**
**Cabinet Rinuy et Santarelli 14, Avenue de la Grande Armée**
**F-75017 Paris (FR)**

Jouve, 18, rue St-Denis, 75001 Paris, France

## Description

L'invention se rapporte aux dispositifs de maintien, en position de stockage sur une structure, d'un appendice déployable autour d'un axe d'articulation. Elle s'applique tout particulièrement aux appendices déployables montés sur les véhicules spatiaux. De tels véhicules utilisent des appendices (générateurs solaires, réflecteurs, mâts, éléments de télécommunications, etc.) qu'il convient de stocker sur le corps même des véhicules pendant la phase de lancement.

Les dimensions importantes de ces appendices exigent leur repliement pour entrer dans le volume alloué par les lanceurs.

Pendant le lancement, ces objets sont maintenus sur le corps du véhicule par plusieurs points de fixation temporaire, auxquels viennent s'ajouter le ou les points de liaison de l'appendice au véhicule qui subsistent après le déploiement de ces appendices. Ces points de liaison permanents comportent en général des mécanismes d'orientation ou de positionnement des appendices pour leur permettre de remplir leur mission sur orbite.

Cette configuration de lancement répond aux exigences suivantes :
— volume (lanceur)
— dimensions géométriques (interface avec le satellite)
— fonctionnement (déploiement de l'appendice)
— tenue mécanique
— rigidité

L'exigence de rigidité a pour but d'assurer un découplage de fréquence entre le lanceur, le satellite et les appendices, ceci afin de limiter les charges et donc de permettre la réalisation d'éléments de masse minimale.

Compte tenu des dimensions des éléments et des fréquences exigées, il est impératif de multiplier les points de maintien. Il est donc nécessaire que le point de liaison permanent de l'appendice sur le satellite soit un point de maintien capable de supporter les charges induites par le lancement.

Ces dernières sont plus importantes que les charges vues par ces points lorsque le satellite est en orbite. Il faut donc dimensionner aussi le mécanisme d'orientation pour les charges de lancement ce qui entraîne inévitablement une perte considérable de masse et de volume utile dans le véhicule.

Il existe à l'heure actuelle divers mécanismes d'orientation dans lesquels un mécanisme de blocage ou de verrouillage est intégré, la commande de déverrouillage s'effectuant sur ordre pyrotechnique après déploiement de l'appendice.

On connaît, par exemple, un dispositif de verrouillage temporaire pour un élément rotatif par rapport à une structure fixe, tel que décrit dans le brevet FR-A-2 452 693 de la Demanderesse, relatif à l'application à un volant à inertie, qui nécessite cependant un ordre de fonctionnement particulier et dont le blocage est intégré au dispositif de pivotement.

On connaît également des dispositifs de maintien de conteneur de stockage de panneaux solaires déployables et orientables ; par exemple une solution décrite dans le brevet FR-A-2 470 727 de la demanderesse consiste à verrouiller chaque articulation d'un bras déployable, ce qui multiplie le nombre d'ordres à donner pour libérer le dispositif de déploiement et ne fournit pas une rigidité optimale.

L'invention a pour but de pallier ces inconvénients et vise en particulier à préserver au maximum les mécanismes de commande (orientation et/ou positionnement) en dérivant tout ou partie des efforts temporaires subis par les appendices lors des phases de lancement, directement dans la structure du véhicule, sans les faire passer par le mécanisme de commande comme dans l'art antérieur.

Dans le cadre des applications spatiales, l'invention propose ainsi un dispositif de dérivation d'effort temporaire pour maintien en position de stockage sur une structure de véhicule spatial d'un appendice déployable autour d'un axe d'articulation sous l'action d'un mécanisme de commande, destiné à soulager mécaniquement ce dernier, caractérisé en ce qu'il comporte des moyens de maintien, extérieurs au mécanisme de commande, adaptés à appliquer à l'appendice, en ladite position de stockage, des précontraintes de flexion longitudinale, se réduisant au niveau de l'axe d'articulation à un couple pur de précontrainte tendant à provoquer le déploiement de l'appendice.

L'invention propose plus particulièrement un dispositif de dérivation d'effort temporaire du genre précité, caractérisé en ce que les moyens de maintien de l'appendice comportent un premier groupe de butées, solidaires de la structure, un second groupe de butées, solidaires de l'appendice, et au moins un moyen de verrouillage temporaire reliant l'appendice et la structure à distance de l'axe d'articulation, ces butées étant disposées de manière à ce que en position de stockage de l'appendice, lors du verrouillage desdits moyens, chacune des butées du premier groupe, réparties en deux sous-groupes disposés le long de l'axe d'articulation de part et d'autre du mécanisme de commande, soit pressée contre une des butées du second groupe, réparties de même en deux sous-groupes disposés le long de l'axe d'articulation de part et d'autre du mécanisme de commande.

Dans un mode préféré de réalisation, un tel dispositif comprend deux butées dans chaque sous-groupe, diamétralement opposées par rapport à l'axe d'articulation. Les surfaces d'affrontement entre butées sont par exemple planes et coplanaires, transmettant les efforts tangentiels de l'appendice vers la structure, soit par frottement sec, soit par cisaillement ou encastrement partiel de celles-ci, le centrage des butées par rapport à l'axe d'articulation pouvant être assuré par des rebords, ou des éléments de révolution solidaires des butées, symétriques par rapport audit axe d'articulation.

Compte tenu de ce que les moyens de maintien sont extérieurs au mécanisme de commande et qu'ils ne provoquent qu'un couple pur dans les supports des butées fixes, ils conduisent à une forte réduction, sinon une suppression, des efforts subis par ce dernier lors de la phase de lancement. De plus, la grande simplicité du dispositif, puisqu'il est essentiellement statique, lui confère une fiabilité élevée ; il n'y a pas de commande de déverrouillage à prévoir au niveau des butées, donc de l'axe d'articulation, puisque les butées affrontées se séparent lors du déploiement de l'appendice et laissent à l'appendice un débattement angulaire d'autant plus important que le nombre de butées est faible. Le déverrouillage peut désormais être obtenu en réponse à un seul ordre donné aux moyens complémentaires de verrouillage précités, par un phénomène pyrotechnique par exemple. Lorsque les butées sont toutes situées dans un plan, le déploiement de l'appendice autorise le fonctionnement du mécanisme de commande d'orientation.

Il faut remarquer que l'invention confère en outre une grande rigidité à l'appendice stocké.

De plus, l'invention permet de mieux « standardiser » les mécanismes de commande, le choix de ces derniers ne nécessitant plus l'étude préalable des charges temporaires que ceux-ci auraient à subir lors du lancement.

D'autres caractéristiques et avantages ressortent de la description qui suit d'un dispositif de dérivation d'effort temporaire, donnée à titre d'exemple non limitatif en regard des dessins annexés sur lesquels :

la figure 1  est une vue latérale schématique d'un appendice en position repliée, équipé d'un dispositif selon l'invention ;

la figure 2  est une vue latérale schématique de l'appendice de la figure 1 en position déployée ;

la figure 3  est une vue en perspective d'un appendice en position repliée, équipé d'un dispositif selon l'invention ;

les figures 4 et 5  sont des vues en perspective d'une autre forme de réalisation d'un dispositif selon l'invention en positions verrouillée et déverrouillée respectivement ;

la figure 6  est une vue latérale de détail d'une autre forme de réalisation (en coupe) ;

les figures 7 et 8  sont des vues en perspective d'une autre forme encore de réalisation d'un dispositif selon l'invention, en positions verrouillée et déverrouillée respectivement ;

la figure 9  est une vue en perspective d'un détail d'un dispositif selon une autre forme de réalisation de l'invention ; et

les figures 10a, 10b, 10c  sont des variantes schématiques de disposition de butées.

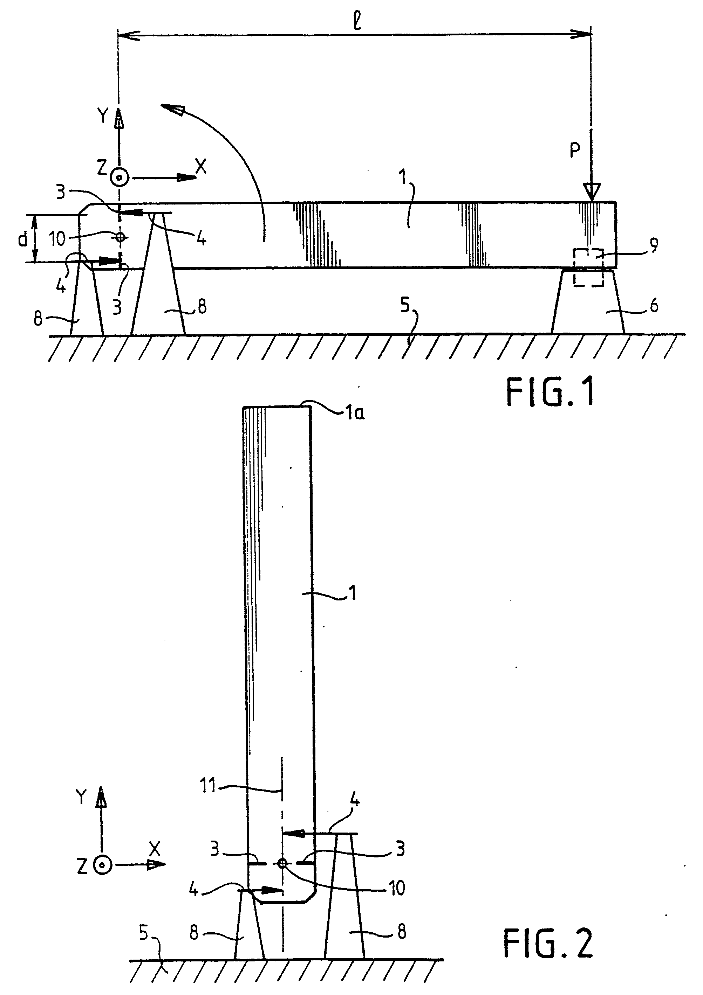

Dans les divers exemples de réalisation illustrés par les figures 1 à 5, 7 et 8, un appendice déployable 1 est articulé autour d'un axe d'articulation 10 sous l'action d'un mécanisme de commande 2 recouvert par une chape. Compte tenu du trièdre de référence (X, Y, Z) fixe choisi, l'axe d'articulation 10 est, en position de stockage de l'appendice, parallèle à l'axe Z. Cet axe d'articulation est, de plus, mais cela n'est pas forcément le cas pour tous les appendices auxquels peut s'appliquer l'invention, monté tournant autour d'un axe de rotation 11, sensiblement parallèle à l'axe de pivotement d'orientation Y, sous le contrôle du mécanisme de commande 2.

Ainsi qu'il apparaît sur les figures de principe 1 et 2, on distingue deux groupes de butées, selon qu'elles sont fixes ou mobiles. Des butées fixes 4 (représentées par des flèches), formant un premier groupe, sont solidaires d'une structure 5, parallèlement à laquelle est replié l'appendice 1 en position de stockage, au moyen de montants 8. Ces butées 4 sont réparties en deux sous-groupes disposés le long de l'axe d'articulation 10 de part et d'autre du mécanisme de commande 2. Des butées mobiles 3 formant un second groupe, sont solidaires de l'appendice 1 et sont disposées de part et d'autre de ce dernier, et du mécanisme de commande, le long de l'axe d'articulation 10.

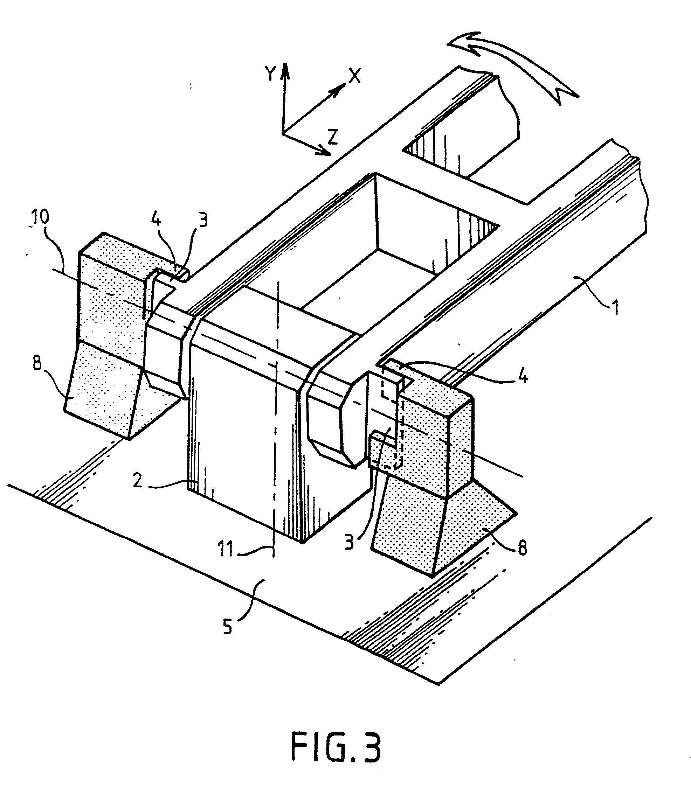

Dans l'exemple de réalisation illustré par ces figures 1 et 2, les butées de chaque sous-groupe sont au nombre de deux, sont de plus planes, et, en outre, radiales, coplanaires et diamétralement opposées. Nous verrons plus loin qu'il n'en est pas nécessairement toujours ainsi, malgré les avantages que présente une telle configuration.

En condition de stockage (figure 1), les butées fixes 4 et mobiles 3 sont appliquées les unes contre les autres. Le positionnement de ces butées est adapté à provoquer, lors de la mise en œuvre du moyen complémentaire de verrouillage temporaire 9 assurant la fixation temporaire de l'appendice 1 sur une embase 6 solidaire de la structure 5 du véhicule, l'apparition de précontraintes de flexion longitudinale, dans le plan XY, qui se réduisent, au niveau de l'axe d'articulation 10, à un couple pur de précontrainte tendant à provoquer le déploiement de l'appendice. En effet, l'essentiel des contraintes existant dans l'appendice 1 au voisinage de l'axe d'articulation sont des contraintes de traction-compression qui sont équilibrées par les réactions des butées fixes 4. La contrainte de cisaillement est transmise aux butées fixes 4 par contact avec les butées mobiles 3. Elle n'induit donc, pour l'axe, aucun effort radial. L'axe d'articulation ne court donc pas le risque de se trouver faussé ou de fausser le mécanisme de commande 2 auquel il est lié.

Le moyen de verrouillage 9 n'est pas détaillé, sa nature ne faisant pas l'objet de la présente demande. Il s'agit par exemple de moyens pyrotechniques classiques disposés parallèlement à l'axe Z entre l'appendice 1 et l'embase 6, cette dernière présentant alors des flancs remontant de part et d'autre de l'appendice pour servir d'appui auxdits moyens. La mise à feu de tels moyens pyrotechniques ou le déverrouillage de l'organe 9 assure automatiquement la séparation des butées fixes et mobiles qui ne nécessitent donc pas d'éléments propres de déverrouillage.

La figure 2 représente l'appendice 1 en position dépliée. Il a subi, par rapport à sa position sur la figure 2, une rotation de 90° et se trouve parallèle à l'axe Y du trièdre de référence. Quoiqu'avantageuse puisqu'elle amène l'extrémité libre 1a de l'appendice a une distance maximale de la structure 5, il est évident que cette configuration ne correspond pas à l'unique position de service moyenne que peut adopter un appendice dans le cadre de l'invention.

Du fait de la rotation de 90° de l'appendice 1, le plan commun des butées mobiles 3 a lui aussi subi une rotation de 90° autour de l'axe d'articulation 10 et se trouve perpendiculaire à l'axe de rotation 11. Les butées fixes 4 et mobiles 3 ne peuvent donc pas, dans cette configuration, venir en contact réciproque lors de la rotation de l'appendice 1 autour de l'axe de rotation 11, qui ne se trouve de ce fait limitée que par les possibilités du mécanisme de commande 2. Cette configuration autorise des rotations de l'appendice autour de l'axe Y grâce à l'absence de butées fixes dans le volume développé par les butées mobiles lors de ces rotations. Cette remarque se généralise à un nombre quelconque de butées dans chaque sous-groupe. De telles possibilités de rotation sont particulièrement avantageuses dans les applications relatives aux panneaux solaires de satellites. En effet, lesdits panneaux doivent être orientés face au soleil, alors que le corps du satellite, sur lequel ils sont maintenus par leur mécanisme d'orientation, doit être orienté vers la terre pour permettre les communications. On voit que le dispositif décrit plus haut permet effectivement de réaliser le mouvement nécessaire, dès lors que l'axe Y est approximativement confondu avec l'axe de rotation du mécanisme d'orientation 2.

Dans la configuration de stockage (figure 1), les efforts induits au sein de l'appendice, du fait de son inertie en particulier, sont transmis, le plus souvent en quasi-totalité si la disposition et le dimensionnement des butées est approprié, directement à la structure 5 par l'intermédiaire des butées fixes 4 et mobiles 3, et leurs montants 8. Le dimensionnement, la disposition et le nombre de ces montants sont quelconques, sous réserve qu'ils s'avèrent capables de transmettre les efforts temporaires.

La pression d'affrontement (face to face joining) entre butées doit correspondre aux efforts maxima qui risquent d'apparaître, sous peine de diminuer la qualité des dérivations d'efforts parallèles au plan YZ, qui se réalisent dans le plan d'affrontement des butées. Si P est la force appliquée à l'appendice au niveau de l'organe complémentaire de verrouillage temporaire 9, si l est l'écart entre l'embase 6 et l'axe d'articulation 10, et si d est la distance moyenne entre butées d'un même sous-groupe, la pression d'affrontement entre butées est liée à P · (l/d.)

La dérivation des efforts $F_{YZ}$ parallèles au plan YZ peut être assurée de plusieurs manières, le plus souvent par frottement sec ou par encastrements réciproques des butées affrontées, ainsi que cela est indiqué plus loin à propos des exemples de réalisation illustrés par les figures 3 à 10. Sur tous ces exemples, les butées fixes 4 sont portées par deux montants 8 disposés de part et d'autre du mécanisme de commande 2, mais il est rappelé que ce nombre est quelconque.

Le mode de réalisation illustré par la figure 3 correspond à une dérivation des efforts temporaires $F_{YZ}$ parallèles au plan YZ par frottement sec. Si Cf est le coefficient de frottement entre butées, ces efforts sont correctement dérivés vers la structure à condition qu'ils vérifient l'inégalité :

$$F_{YZ} < 2 \cdot Cf \cdot P \ (l/d)$$

Il est évident qu'il est avantageux de disposer de butées à fort coefficient de frottement, ou de leur appliquer un revêtement approprié.

Les butées sont représentées comme de simples excroissances des montants 8 et de l'appendice 1 parallèlement à l'axe d'articulation 10. Il est à noter que les butées mobiles 3 d'un même côté de l'appendice ne sont pas différenciées, étant formées d'une portion de plaque, perpendiculaire à l'axe longitudinal de l'appendice, et prolongeant l'axe d'articulation 10.

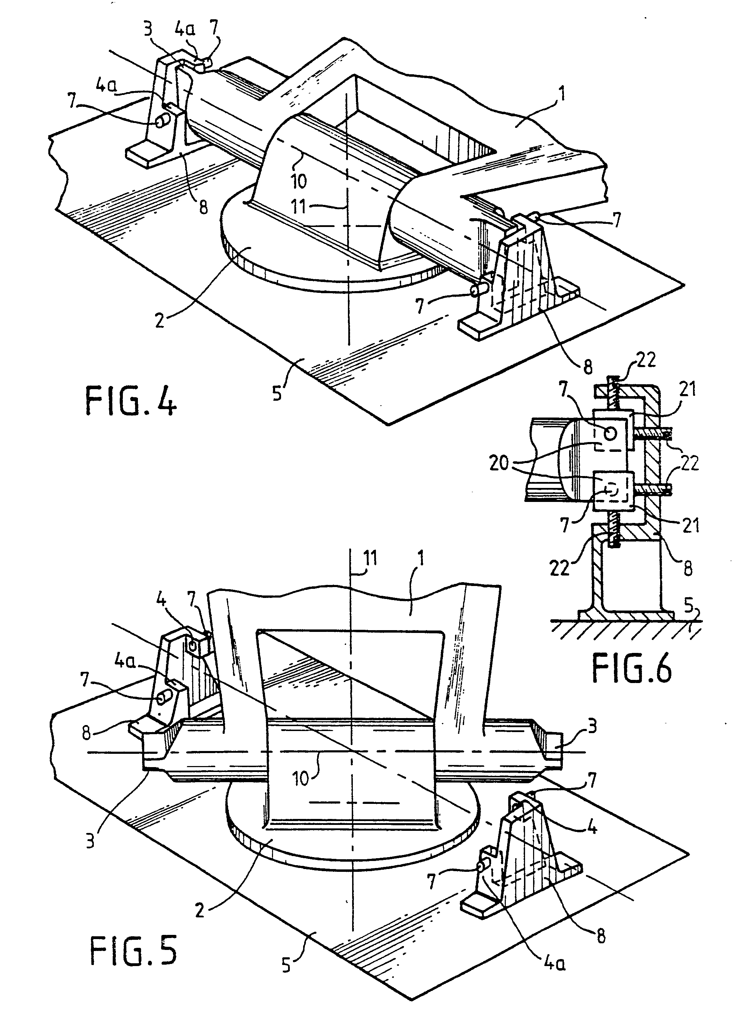

Les figures 4 et 5 illustrent une structure de maintien d'appendice assez analogue à la précédente. De nombreuses variantes de forme ont été apportées. Il est à noter en particulier que les butées fixes 4 sont ici formées par la tête plate d'organes rapportés, tels que des vis 7, traversant des excroissances 4a parallèles à l'axe Z, analogue à celles qui constituent les butées fixes de la figure 3.

La figure 6 illustre, à titre d'exemple, quelques moyens périphériques optionnels, adaptés à assurer un calage des butées entre elles, sans glissement intempestif de l'une par rapport à l'autre. Dans le cas d'une immobilisation qui n'est pas assurée par friction, on peut prévoir avantageusement des plaquettes 20, réglables au moyen de vis calantes 7 et 22, comportant des rebords 21 permettant le maintien en butée sans glissement de l'appendice par rapport à la structure. Il est impératif de choisir pour une telle plaquette 20, un matériau qui ne soit pas susceptible de se souder par diffusion sous vide avec les autres éléments en contact. Sa surface tournée vers les butées mobiles 3 peut en outre être en contact avec la tranche supérieure de ces butées, et/ou constituer une portion de cylindre centrée sur l'axe 10 adaptée à assurer un début de guidage lors du déploiement.

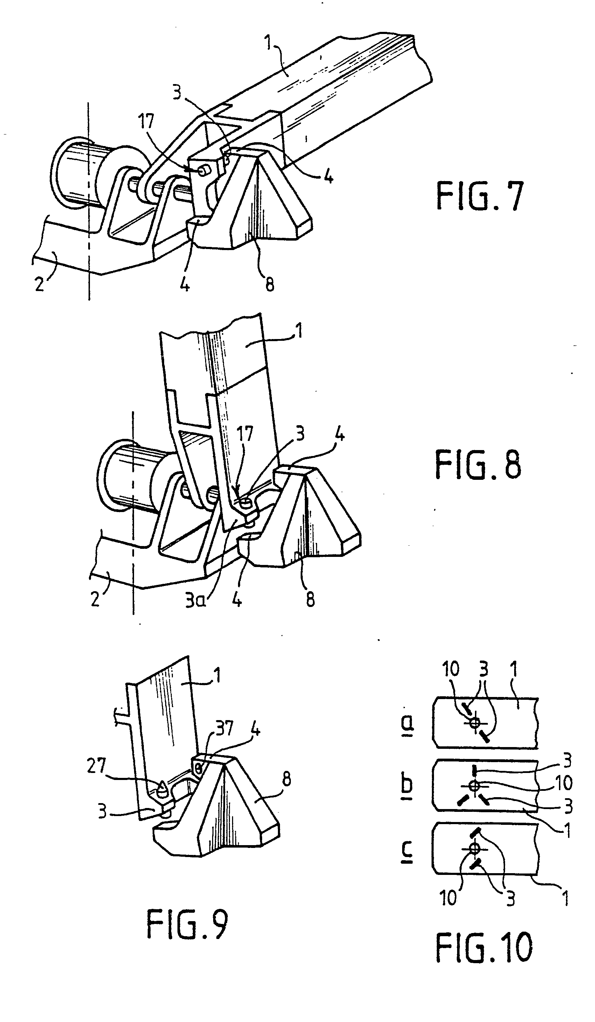

Les figures 7 et 8 illustrent un mode de réalisation de dérivation selon l'invention qui diffère essentiellement de celui des figures 4 et 5 par le fait que le réglage des surfaces d'affrontement de butées

4

associées est assuré au moyen de vis 17 rapportées non pas aux montants fixes 8, mais à l'appendice 1. Les surfaces d'affrontement sont les têtes plates 3a des vis 17 et les butées 4.

La figure 9 illustre un mode de réalisation selon l'invention où la dérivation des efforts parallèles au plan YZ est assurée, non plus uniquement par des phénomènes de frottement sec, mais aussi grâce à la résistance au cisaillement de pions 27 portés par l'une des butées, mobile dans l'exemple proposé, adaptés à s'encastrer temporairement dans des cavités ou canaux 37 de forme complémentaire ; un réglage de position du pion 27, ou de la cavité 37 dans un plan parallèle à YZ est bien sûr avantageux pour tirer un parti maximum de ces éléments encastrables.

La figure 10 schématise quelques variantes possibles de disposition des butées mobiles 3 liées à l'appendice 1. Sur la figure 10a, les butées sont au nombre de deux ; leurs surfaces d'affrontement avec des butées fixes 4 sont coplanaires avec l'axe d'articulation 10 selon un plan dont l'inclinaison par rapport au plan YZ est avantageusement choisie de manière que les efforts temporaires maxima à dériver soient perpendiculaires auxdites surfaces d'affrontement. La figure 10b présente une disposition à au moins 3 butées radiales par sous-groupe ; la dérivation des efforts est en outre obtenue par frottement sec, les surfaces d'affrontement n'étant pas coplanaires ; cette dérivation est en outre facilitée en raison du nombre accru de butées. la figure 10c propose une disposition à deux butées non radiales mais parallèles. Il est à noter que la multiplication des butées ne facilite pas l'obtention d'une rotation de l'appendice autour de son axe après le déploiement sans limitation par contact de butées fixes et mobiles. On peut vérifier que dans chacune de ces figures 10a à 10c, la mise sous flexion de l'appendice induit un couple pur au voisinage de l'axe d'articulation 10.

Il est bien entendu que de nombreuses variantes de disposition, de nombre, et de nature de butées peuvent être proposées, par combinaison ou non des précédentes, sans sortir du cadre de l'invention. Les surfaces d'affrontement pourraient ainsi ne pas être planes, présentant par exemple des reliefs complémentaires (telles que des pyramides etc.) répartis de manière périodique ou non. Elles peuvent être inclinées par rapport à chacun des trois axes. Elles peuvent avoir des formes courbes telles que portions de surfaces de révolution (sphères, cônes) dont les axes sont parallèles aux réactions d'appui sur les butées.

La dérivation obtenue grâce à un dispositif selon l'invention est bien entendu, d'autant plus effective que les butées sont liées plus rigidement à l'appendice et à la structure.

Par ailleurs, le nombre d'embases de fixation est quelconque.

Il va de soi que la présente invention n'a été décrite et représentée qu'à titre purement explicatif et nullement limitatif et qu'on pourra apporter des équivalences techniques dans ses éléments constitutifs sans pour autant sortir du cadre de ladite invention, lequel est défini dans les revendications annexées.

**Revendications**

1. Dispositif de dérivation d'effort temporaire pour maintien en position de stockage sur une structure (5) de véhicule spatial, d'un appendice (1) déployable autour d'un axe d'articulation (10) sous l'action d'un mécanisme de commande (2), destiné à soulager mécaniquement ce dernier, caractérisé en ce qu'il comporte des moyens de maintien (3, 4, 9), extérieurs au mécanisme de commande, adaptés à appliquer à l'appendice (1), en ladite position de stockage, des précontraintes de flexion longitudinale, se réduisant au niveau de l'axe d'articulation (10) à un couple pur de précontrainte tendant à provoquer le déploiement de l'appendice.

2. Dispositif de dérivation d'effort temporaire selon la revendication 1, caractérisé en ce que les moyens de maintien de l'appendice comportent un premier groupe de butées (4), solidaires de la structure, un second groupe de butées (3), solidaires de l'appendice, et au moins un moyen de verrouillage temporaire (9) reliant l'appendice (1) et la structure (5) à distance de l'axe d'articulation (10), ces butées (3, 4) étant disposées de manière que, en position de stockage de l'appendice, lors du verrouillage, chacune des butées (4) du premier groupe, réparties en deux sous-groupes disposés le long de l'axe d'articulation (10) de part et d'autre du mécanisme de commande (2), soit pressée contre une des butées (3) du second groupe, réparties de même en deux sous-groupes disposés le long de l'axe d'articulation de part et d'autre du mécanisme de commande (2).

3. Dispositif de dérivation d'effort temporaire selon la revendication 2, dans lequel l'axe d'articulation (10) est lui-même mobile autour d'un axe de rotation (11) qui lui est perpendiculaire, caractérisé en ce qu'en outre, la disposition géométrique des butées (3, 4) et leur nombre sont tels que, en condition d'alignement avec ledit axe de rotation, l'appendice (1) soit adapté à tourner autour de lui-même sans que des butées (3 ou 4) d'un groupe ne vienne buter contre une butée (3 ou 4) de l'autre groupe.

4. Dispositif de dérivation d'effort temporaire selon la revendication 2, caractérisé en ce que chacun des sous-groupes comporte deux butées diamétralement opposées par rapport à l'axe d'articulation.

5. Dispositif de dérivation d'effort temporaire selon la revendication 3, dans lequel, en position de stockage, l'appendice est perpendiculaire à l'axe de rotation, caractérisé en ce que chacun des sous-groupes comporte deux butées diamétralement opposées par rapport à l'axe d'articulation (10), et situées dans un même plan perpendiculaire à l'appendice (1) en position de stockage.

6. Dispositif de dérivation d'effort temporaire selon l'une quelconque des revendications 2 à 5, caractérisé par une valeur élevée du coefficient de frottement des surfaces d'affrontement d'une partie au moins des butées (3, 4).

7. Dispositif de dérivation d'effort temporaire selon l'une quelconque des revendications 2 à 6, caractérisé par la planéité des surfaces d'affrontement des butées (3, 4).

8. Dispositif de dérivation d'effort temporaire selon la revendication 7, caractérisé en ce que l'axe d'articulation est coplanaire avec les surfaces d'affrontement d'une partie au moins des butées.

9. Dispositif de dérivation d'effort temporaire selon la revendication 7, caractérisé en ce que les surfaces d'affrontement des butées sont parallèles, leur inclinaison étant déterminée en fonction de l'orientation des efforts à dériver.

10. Dispositif de dérivation d'effort temporaire selon la revendication 7, caractérisé en ce que les surfaces d'affrontement d'au moins trois butées sont radiales à l'axe d'articulation et à frottement sec.

11. Dispositif de dérivation d'effort temporaire selon l'une quelconque des revendications 2 à 8, caractérisé en ce que deux ou moins des butées destinées à s'affronter comportent des moyens complémentaires d'encastrement (27, 37), tels que des pions dans des canaux.

12. Dispositif de dérivation d'effort temporaire selon l'une quelconque des revendications 2 à 9, caractérisé en ce que certaines au moins des butées comportent des organes périphériques de calage tels que rebords, adaptés à empêcher tout glissement entre leurs surfaces d'affrontement.

13. Dispositif de dérivation d'effort temporaire selon l'une quelconque des revendications 2 à 11, caractérisé en ce qu'une au moins des butées (3 ou 4) comporte des moyens de réglage (7, 17) à l'encontre de la butée (3 ou 4) à laquelle elle est affrontée en position de stockage.

**Claims**

1. A device for deviating a temporary force to hold in storage position, on a structure (5) of space vehicle, an appendix (1) displayable about a hinging axis (10) under the action of a control mechanism (2) for mechanically relieving the latter, characterized in that it comprises holding means (3, 4, 9), external to the control mechanism, adapted for application to the appendix (1), in said storage position, of longitudinal flexural prestresses being reduced at the hinging axis (10) to a pure prestress torque tending to cause displaying of the appendix.

2. A device for deviating a temporary force according to claim 1, characterized in that the holding means for the appendix comprise a first group of abutments (4) made integral with the structure, a second group of abutments (3) made integral with the appendix and at least one temporary locking means (9) connecting the appendix (1) and the structure (5) at a distance from the hinging axis (10), with such abutments (3, 4) being disposed so that in the storage position of the appendix upon locking thereof, each of the abutments (4) in the first group, distributed into two sub-groups disposed along the hinging axis (10) on either side of the control mechanism (2), is pushed against one of the abutments (3) in the second group, also distributed into two sub-groups disposed along the hinging axis on either side of the control mechanism (2).

3. A device for deviating a temporary force according to claim 2, wherein the hinging axis (10) is itself movable about a rotational axis (11) which is perpendicular thereto, characterized in that in addition, the geometric arrangement of the abutments (3, 4) and their number are such that, the appendix (1) being in aligned position with said rotational axis, it is adapted to rotate about itself without the abutments (3 or 4) in one group being brought into abutment with another abutment (3 or 4) in the other group.

4. A device for deviating a temporary force according to claim 2, characterized in that each of the sub-groups comprises two diametrically opposed abutments relative to the hinging axis.

5. A device for deviating a temporary force according to claim 3, wherein, the appendix being in the storage position, it is perpendicular to the rotational axis, characterized in that each of the sub-groups comprises two abutments diametrically opposed relative to the hinging axis (10), and located in one and the same plane perpendicular to the appendix (1) in storage position.

6. A device for deviating a temporary force according to any one of claims 2 to 5, characterized by a high value of the frictional coefficient of the mutually facing surfaces of at least part of the abutments (3, 4).

7. A device for deviating a temporary force according to any one of claims 2 to 6, characterized in that the mutually facing surfaces of the abutments (3, 4) are planar.

8. A device for deviating a temporary force according to claim 7, characterized in that the hinging axis is coplanar with the mutually facing surfaces of at least part of the abutments.

9. A device for deviating a temporary force according to claim 7, characterized in that the mutually facing surfaces of the abutments are parallel, with inclination thereof being determined as a function of the orientation of the forces to be deviated.

10. A device for deviating a temporary force according to claim 7, characterized in that the mutually facing surfaces of at least three abutments are radial relative to the hinging axis, said surfaces having dry friction.

11. A device for deviating a temporary force according to any one of claims 2 to 8, characterized in that at least two abutments intended for facing each other comprise complementary fitting in means (27, 37) such as pawns into grooves.

12. A device for deviating a temporary force according to any one of claims 2 to 9, characterized in that at least some of the abutments comprise peripheral blocking means such as flanges adapted to prevent sliding between their mutually facing surfaces.

13. A device for deviating a temporary force according to any one of claims 2 to 11, characterized in that at least one of the abutments (3 or 4) comprises adjusting means (7, 17) against the abutment (3 or 4) to which it is confronted in the storage position.

**Patentansprüche**

1. Vorrichtung zur Umlenkung einer zeitweise auftretenden Kraft zum Halten eines unter der Wirkung eines Steuermechanismus (2) um eine Gelenkachse (10) herumfaltbaren Auslegers (1) in einer Ruhestellung auf einem Aufbau (5) eines Raumfahrzeugs, die zum mechanischen Entlasten des Steuermechanismus (2) bestimmt ist, dadurch gekennzeichnet, daß sie außerhalb des Steuermechanismus Haltemittel (3, 4, 9) umfaßt, die zur Ausübung von longitudinalen Biegevorspannungen auf den Ausleger (1) in seiner Ruhestellung geeignet sind, welche sich auf dem Niveau der Gelenkachse auf ein reines Vorspannmoment reduzieren, das bestrebt ist, die Entfaltung des Auslegers zu bewirken.

2. Vorrichtung zur Umlenkung einer zeitweise auftretenden Kraft nach Anspruch 1, dadurch gekennzeichnet, daß die Haltemittel des Auslegers eine erste Gruppe von Anschlägen (4) fest verbunden mit dem Aufbau, eine zweite Gruppe von Anschlägen (3) fest verbunden mit dem Ausleger und wenigstens ein Mittel zur zeitweisen Verriegelung (9) umfaßt, das den ausleger (1) und den Aufbau (5) in einem Abstand von der Gelenkachse (10) verbindet, wobei die Anschläge (3, 4) so angeordnet sind, daß in der Ruhestellung des Auslegers während der Verriegelung jeder der Anschläge (4) der ersten Gruppe, die in zwei Untergruppen aufgeteilt sind, welche längs der Gelenkachse (10) beiderseits des Steuermechanismus (2) angeordnet sind, gegen einen der Anschläge (3) der zweiten Gruppe gepreßt ist, die ebenso in zwei Untergruppen aufgeteilt sind, welche längs der Gelenkachse beiderseits des Steuermechanismus (2) angeordnet sind.

3. Vorrichtung zur Umlenkung einer zeitweise auftretenden Kraft nach Anspruch 2, in welcher die Gelenkachse (10) selbst um eine Rotationsachse (11) senkrecht zu ihr beweglich ist, dadurch gekennzeichnet, daß außerdem die geometrische Anordnung der Anschläge (3, 4) und ihre Anzahl so ist, daß der Ausleger (1) bei Ausrichtung mit der Rotationsachse sich um sich selbst drehen kann, ohne daß die Anschläge (3 oder 4) der einen Gruppe gegen einen der Anschläge (3 oder 4) der anderen Gruppe anstoßen.

4. Vorrichtung zum Umlenken einer zeitweise auftretenden Kraft nach Anspruch 2, dadurch gekennzeichnet, daß jede der Untergruppen zwei in Bezug auf die Gelenkachse diametral gegenüberliegende Anschläge umfaßt.

5. Vorrichtung zur Umlenkung einer zeitweise auftretenden Kraft nach Anspruch 3, in welcher der Ausleger in der Ruhestellung senkrecht zur Rotationsachse ist, dadurch gekennzeichnet, daß jede der Untergruppen zwei Anschläge umfaßt, die in Bezug auf die Gelenkachse (10) einander diametral gegenüberliegen und die in einer selben Ebene senkrecht zum Ausleger (1) in seiner Ruhestellung angeordnet sind.

6. Vorrichtung zur Umlenkung einer zeitweise auftretenden Kraft nach einem der Ansprüche 2 bis 5, dadurch gekennzeichnet, daß durch einen erhöhten Reibungskoeffizienten der Angriffsoberflächen von einem Teil wenigstens der Anschläge (3, 4).

7. Vorrichtung zur Umlenkung einer zweitweise auftretenden Kraft nach einem der Ansprüche 1 bis 6, gekennzeichnet durch Ebenheit der Angriffsoberflächen der Anschläge (3, 4).

8. Vorrichtung zur Umlenkung einer zeitweise auftretenden Kraft nach Anspruch 7, dadurch gekennzeichnet, daß die Gelenkachse koplanar mit den Angriffsoberflächen von wenigstens einem Teil Anschläge ist.

9. Vorrichtung zur Umlenkung einer zeitweise auftretenden Kraft nach Anspruch 7, dadurch gekennzeichnet, daß die Angriffsoberflächen der Anschläge parallel sind, wobei ihre Neigung als Funktion der Orientierung der umzulenkenden Kräfte bestimmt ist.

10. Vorrichtung zur Umlenkung einer zeitweise auftretenden Kraft nach Anspruch 7, dadurch gekennzeichnet, daß die Angriffsoberflächen von wengistens drei Anschlägen radial zur Gelenkachse und in trockener Reibung sind.

11. Vorrichtung zur Umlenkung einer zeitweise auftretenden Kraft nach einem der Ansprüche 2 bis 8, dadurch gekennzeichnet, daß wenigstens zwei der aneinander angreifenden Anschläge ergänzende Mittel zum Ineinandergreifen (27, 37) umfassen, wie in Kanälen angeordnete Stifte.

12. Vorrichtung zur Umlenkung einer zeitweise auftretenden Kraft nach einem der Ansprüche 2 bis 9, dadurch gekennzeichnet, daß wenigstens bestimmte der Anschläge periphere Organe zum Verkeilen wie Randleisten umfassen, die zum Verhindern jedes Gleitens zwischen ihren Angriffsoberflächen ausgebildet sind.

13. Vorrichtung zur Umlenkung einer zeitweise auftretenden Kraft nach einem der Ansprüche 2 bis 11, dadurch gekennzeichnet, daß wenigstens einer der Anschläge (3 oder 4) Einstellmittel (7, 17) gegen den Anschlag (3 oder 4) umfaßt, an welchem er in der Ruhestellung angreift.

FIG.1

FIG.2

FIG.3

FIG.4

FIG.5

FIG.6

FIG.7

FIG.8

FIG.9

FIG.10

4